(19) **Europäisches Patentamt**

**European Patent Office**

**Office européen des brevets**

(11) **EP 0 546 295 B1**

(12) **EUROPÄISCHE PATENTSCHRIFT**

(45) Veröffentlichungstag und Bekanntmachung des Hinweises auf die Patenterteilung:
**03.04.1996  Patentblatt 1996/14**

(51) Int. Cl.$^6$: **B60G 17/08**

(21) Anmeldenummer: **92118297.8**

(22) Anmeldetag: **26.10.1992**

(54) **Semiaktives Fahrwerksregelungssystem**

Semi-active undercarriage control system

Système de réglage semi-actif pour mécanisme de roulement

(84) Benannte Vertragsstaaten:
**DE FR GB**

(30) Priorität: **11.12.1991 DE 4140752**

(43) Veröffentlichungstag der Anmeldung:
**16.06.1993  Patentblatt 1993/24**

(73) Patentinhaber: **ITT Automotive Europe GmbH**
**D-60488 Frankfurt (DE)**

(72) Erfinder:
• **Eckert, Alfred**
**W-6500 Mainz-Laubenheim (DE)**

• **Hoffmann, Michael**
**W-3550 Marburg/Lahn (DE)**

(74) Vertreter: **Blum, Klaus-Dieter, Dipl.-Ing.**
**c/o ITT Automotive Europe GmbH**
**Guerickestrasse 7**
**D-60486 Frankfurt (DE)**

(56) Entgegenhaltungen:
**EP-A- 0 378 202          DE-A- 3 939 292**
**DE-A- 4 007 177          DE-C- 4 103 188**
**US-A- 5 013 062          US-A- 5 060 157**
**US-A- 5 062 657**

Printed by Rank Xerox (UK) Business Services
2.9.13/3.4

## Beschreibung

Die Erfindung bezieht sich auf ein semiaktives Fahrwerksregelungssystem für Kraftfahrzeuge, mit regelbaren Schwingungsdämpfern, mit Sensoren zur Ermittlung der für die Regelung benötigten Informationen über den Fahrzustand und über das Fahrwerksverhalten, und mit elektronischen Schaltkreisen zur Verarbeitung der Sensorsignale und zur Erzeugung von Dämpfkraftregelsignalen, mit denen die Schwingungsdämpfer ansteuerbar sind.

Aus der deutschen Offenlegungsschrift DE 39 39 292 ist bereits ein derartiges Fahrwerksregelungssystem mit elektronischen Schaltkreisen bekannt, die aus Sensorsignalen, welche die für die Regelung benötigten Informationen liefern, die gewünschten Dämpfkraftregelsignale zur Ansteuerung der Schwingungsdämpfer ermitteln. Bei diesem bekannten semiaktiven System wird in Abhängigkeit von der Fahrzeuggeschwindigkeit, dem Drosselklappenwinkel, Pedalweg oder Bremsdruck, Lenkwinkel und Lenkwinkelgeschwindigkeit ein "Sicherheitsniveau" definiert und in Abhängigkeit von diesem Niveau die Dämpfung bzw. Dämpfungshärte eingestellt. Liegt ein hohes Sicherheitsniveau vor, was durch Auswertung der Sensorsignale erkennbar ist, kann die Dämpfung im Hinblick auf hohen Komfort "weich" eingestellt werden. Ist dagegen das Sicherheitsniveau niedrig bzw. das "Gefährdungsniveau" hoch, hat die "Sicherheit" Priorität vor dem Komfort, weshalb die Dämpfung - unter Hintanstellung des Komforts - auf ein für die Fahrstabilität günstiges Verhalten, also auf "hart" eingestellt wird. Ein solches niedriges Sicherheitsniveau kann sich z.B. durch sicherheitskritische Lenkmanöver, Bremsmanöver und dergl. ergeben. Die optimale Einstellung der Dämpfung in Abhängigkeit von den Sensorsignalen bereitet jedoch Schwierigkeiten, weil je nach Fahrsituation sehr unterschiedliche Reaktionen auf die Sensorsignale bzw. Einstellung der Dämpfkraft erforderlich sind, wenn gleichzeitig die Sicherheit gewährleistet und ein möglichst hoher Komfort erhalten bleiben soll.

Aus der vorgenannten Offenlegungsschrift ist auch die Überlegung bekannt, ABS/ASR-Systeme mit Fahrwerksregelungssystemen zu vereinen. Im Vergleich zu zwei getrennten Systemen wird dadurch der Herstellungsaufwand reduziert, weil einige der Sensoren, Teile der Elektronik und der Hydraulik für das Verbundsystem gemeinsam genutzt werden können. Auch ergibt sich eine Verbesserung der Regelung, weil z.B. die Bremswirkung oder der Eintritt in eine Blockierschutzregelung durch Eingriff in die Dämpfung unterstützt werden können.

Der vorliegenden Erfindung liegt die Aufgabe zugrunde, die Regelung der Dämpfkraft in Abhängigkeit von den unterschiedlichen Fahrzuständen und Fahrmanövern entscheidend zu verbessern, mit dem Ziel, in allen Situationen eine möglichst hohe Fahrsicherheit oder Fahrstabilität zu gewährleisten und gleichzeitig den Fahrkomfort nur soweit zu reduzieren, wie es im Hinblick auf den Erhalt der Fahrsicherheit notwendig ist.

Es hat sich gezeigt, daß diese Aufgabe mit einem Fahrwerksregelungssystem der eingangs genannten Art gelöst werden kann, dessen Besonderheit darin besteht, daß diese einen Schaltkreis oder Rechner (22) aufweist, in dem der Sollwert der Dämpfkraft ($F_D$) aus der Aufbaugeschwindigkeit ($v_B$), aus der Dämpfergeschwindigkeit ($v_D$), unter Beachtung des Vorzeichens der Dämpfergeschwindigkeit (sign ($v_D$)) sowie aus von einem Sicherheitsstatus (S) abhängigen Parametern ($c_1$, $c_2$, $c_3$) nach der Beziehung

$$F_D = c_1 \times v_B + c_2 \times v_D + c_3 \times \text{sign}(v_D);$$

$$F_D = 0, \text{ wenn sign}(v_D) \neq \text{sign}(F_D)$$

errechnet wird, und daß Schaltkreise vorhanden sind, mit denen eine den Bedarf an Seitenführungs- und/oder Längskräften wiedergebende Komponente des Sicherheitsstatus und eine die Wank- und/oder Nickgefährdung wiedergebende Komponente des Sicherheitsstatus gebildet und mit denen die Parameter in Abhängigkeit von den Komponenten des Sicherheitsstatus ermittelt werden.

Durch die erfindungsgemäße Unterscheidung in die beiden Sicherheitskomponenten, die unterschiedliche Gefährdungen darstellen und die die Größe der einzelnen Parameter und damit den Einfluß der Aufbaugeschwindigkeit und der Dämpfergeschwindigkeit auf die Dämpfkraft bestimmen, wird eine genaue und zutreffende Anpassung der Dämpfkraft an die sehr unterschiedlichen Fahrzustände und Fahrsituationen erreicht. Eine derartige, genaue Anpassung unter spezifischer Berücksichtigung der einzelnen Einflußgrößen und des Zusammenwirkens der einzelnen Einflußgrößen führt schließlich zu einer besonders hohen Regelgüte.

Mehrere besonders vorteilhafte Ausführungsarten der Erfindung sind in den Unteransprüchen beschrieben.

Weitere Merkmale, Vorteile und Anwendungsmöglichkeiten gehen aus der folgenden Beschreibung eines Ausführungsbeispiels der Erfindung anhand der beigefügten Abbildungen und Diagramme hervor.

Es zeigen

| | |
|---|---|
| Fig. 1 | in Prinzipdarstellung die wichtigsten Einheiten, d.h. Sensoren und Schaltkreise, eines Regelungssystems nach der Erfindung und deren Zusammenwirken, |
| Fig. 2 bis Fig. 5 | Diagramme zur Erläuterung der Wirkungsweise des Systems nach Fig. 1 und der Signalverarbeitung. |

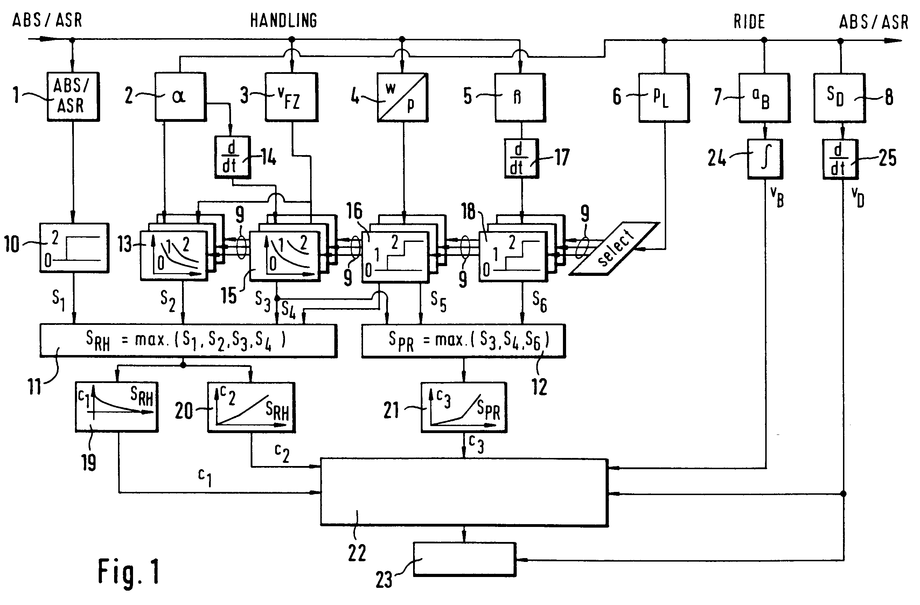

Nach Fig. 1 besteht das erfindungsgemäße System im wesentlichen aus Sensoren oder Eingangsschaltkreisen 1 bis 8, mit denen die benötigten Informationen über den Fahrzustand und das Verhalten des Fahrzeugs gewonnen oder aufbereitet werden, und aus Schaltkreisen 10 bis 25 zur Verarbeitung, logischen Verknüpfung und Auswertung der Informationen. Die über die Sensoren oder Schaltkreise 1 bis 5 zugeführten Informationen sind vornehmlich von den den Aktivitäten des Fahrzeugführers, d.h. vom "HANDLING" abhängig, während die mit den Sensoren oder Schaltkreisen 6 bis 8 gewonnenen Informationen, die unter dem Stichwort "RIDE" zusammengefaßt sind, höchstens indirekt vom Fahrer beeinflußt werden können.

Über den Schaltkreis 1 wird das Einsetzen einer Regelung, nämlich Blockierschutzregelung (ABS) oder Antriebsschlupfregelung (ASR), erkannt. Das Piktogramm in einem Schaltkreis 10 symbolisiert, daß hier nur unterschieden wird, ob die Regelung aktiviert ist oder nicht. Eine genauere Analyse des Regelungsvorgangs und entsprechende Auswertung für die Fahrwerksregelung ist natürlich ebenfalls möglich und kann zu einer Verbesserung der Fahrwerksregelung führen.

Das Ausgangssignal $S_1$ dieses Schaltkreises 10 wird zu einem Schaltkreis 11 weitergeleitet, in dem eine Komponente $S_{RH}$, die den Bedarf an Seitenführungs- und/oder Längskräften des Fahrzeugs in der jeweiligen Situation wiedergibt, errechnet wird. Aus dieser Komponenten $S_{RH}$ und einer zweiten Komponenten $S_{PR}$, die in einem Schaltkreis 12 errechnet wird und deren Wert die momentane Wank- und/oder Nickgefährdung darstellt, werden Parameter $c_1$, $c_2$, $c_3$ zur Errechnung der Dämpfkraft ermittelt.

Der Sensor oder der Schaltkreis 2 dient zur Ermittlung des Lenkwinkels $\alpha$. Aus dem Lenkwinkel wird in einem Schaltkreis 13 ein Signal $S_2$ und nach Differentation $\dot{\alpha}$ in einer Stufe 14 und Verarbeitung in einem Schaltkreis 15 ein Signal $S_3$ erzeugt. $S_2$ und $S_3$ sind außerdem noch von der mit Hilfe des Sensors 3 ermittelten Fahrzeuggeschwindigkeit $v_{FZ}$ abhängig. Das Signal $S_3$ wird auch bei der Errechnung der zweiten Sicherheitskomponenten $S_{PR}$ berücksichtigt.

Aus dem Bremspedalweg w und/oder dem Bremsdruck p wird mit Hilfe der Sensoren oder des Schaltkreises 4 eine Information gewonnen, aus der sich nach Verarbeitung in einem Schaltkreis 16 weitere Signale $S_4$ und $S_5$ ableiten lassen, die für die Ermittlung des Bedarfs an Seitenführungs- oder Längskräften (Komponente $S_{RH}$) und für die Ermittlung der Wank- oder Nickgefährdungs-Komponenten $S_{PR}$ von Nutzen sind.

Der mit dem Sensor 5 gemessene Drosselklappenwinkel $\beta$ bzw. die durch Differentation in einem Schaltkreis 17 gebildete Winkelgeschwindigkeit $\dot{\beta}$ wird unter Berücksichtigung des mit Hilfe des Drucksensors 6 gemessenen Druckniveaus $p_L$ in den Schwingungsdämpfern oder des an der Hinterachse des Fahrzeugs auf andere Weise ermittelten Beladungszustandes in einer Verknüpfungsschaltung 18 zur Bildung eines Signals $S_6$ herangezogen, das einen wichtigen Beitrag zur Errechnung der die Wank- oder Nickgefährdung wiedergebenden Komponenten $S_{PR}$ liefert.

Die Signale, die das Druckniveau $p_L$ in den Schwingungsdämpfern oder die Beladung wiedergeben, werden auch über die Signalleitungen 9 den bereits beschriebenen Schaltkreisen 13,15,16 zugeführt und in der Errechnung der Signale $S_2$, $S_3$, $S_4$ und $S_5$ einbezogen.

Aus den Komponenten $S_{RH}$ und $S_{RP}$ bzw. aus den Ausgangssignalen von Schaltkreisen 11 und 12 werden schließlich die für die Ermittlung des Dämpfkraft-Sollwertes $F_D$ maßgebenden Parameter $c_1$, $c_2$ und $c_3$ bestimmt. Die Piktogramme in den Schaltblöcken 19,20,21 symbolisieren die prinzipielle Abhängigkeit dieser Parameter $c_1$, $c_2$, $c_3$ von den Komponenten $S_{RH}$ bzw. $S_{PR}$ in dem beschriebenen Ausführungsbeispiel der Erfindung.

In einem Schaltkreis und Rechner 22 wird schließlich unter Berücksichtigung der Parameter $c_1$, $c_2$, $c_3$ aus der Aufbaugeschwindigkeit $v_B$ und aus der Dämpfergeschwindigkeit $v_D$ nach der Beziehung

$$F_D = c_1 \times v_B + c_2 \times v_D + c_3 \times \text{sign}(v_D);$$

$$F_D = 0, \text{ wenn } \text{sign}(v_D) \neq \text{sign}(F_D)$$

der Sollwert der Dämpfkraft $F_D$ errechnet, aus dem schließlich in einem Block 23 die Regelsignale für die einzelnen Schwingungsdämpfer und damit die Stellsignale für die einzelnen (nicht dargestellten) Regelventile der Schwingungsdämpfer abgeleitet werden.

Die Aufbaugeschwindigkeit $v_B$ wird im vorliegenden Fall mit Hilfe von Aufbaubeschleunigungssensoren 7, deren Ausgangssignale in einem Schaltkreis 24 integriert werden, gemessen. Die Dämpfergeschwindigkeit $v_D$ kann z.B. durch Messung des Dämpferweges mit Hilfe von Wegsensoren 8 und Differentation der Ausgangssignale in einem Schaltkreis 25 oder durch andere bekannte Berechnungsmethoden ermittelt werden. Es ist auch möglich, auf Wegsensoren 8 zu verzichten und die Dämpfergeschwindigkeit $v_D$ aus der Aufbaubeschleunigung $a_B$, ggf. unter Zuhilfenahme weiterer Sensoren bzw. Informationen über das Fahrwerksverhalten, rein rechnerisch zu ermitteln.

Ist die erfindungsgemäße Fahrwerksregelung in einem Fahrzeug installiert, das über ein ABS/ASR verfügt, werden zweckmäßigerweise die Informationen über die Fahrzeuggeschwindigkeit $v_{FZ}$, über den Pedalweg w oder Bremsdruck p und über den Drosselklappenwinkel $\beta$, für die nach Fig. 1 die Schaltkreise 3, 4 und 5 vorgesehen sind, gemeinsam sowohl für das ABS/ASR als auch für die Fahrwerksregelung verwendet. Dies führt zu Einsparungen am Herstellungsaufwand. Der Lenkwinkel $\alpha$ (ermittelt durch den Sensor oder Schaltkreis 2), das Dämpfer-Druckniveau oder die Beladung des Fahrzeugs (Schaltkreis 6), die Aufbaubeschleunigung $a_B$ und der Dämpferweg $S_D$ (8) können andererseits zur Verbesserung der Blockierschutz- und Antriebsschlupfregelung beitragen.

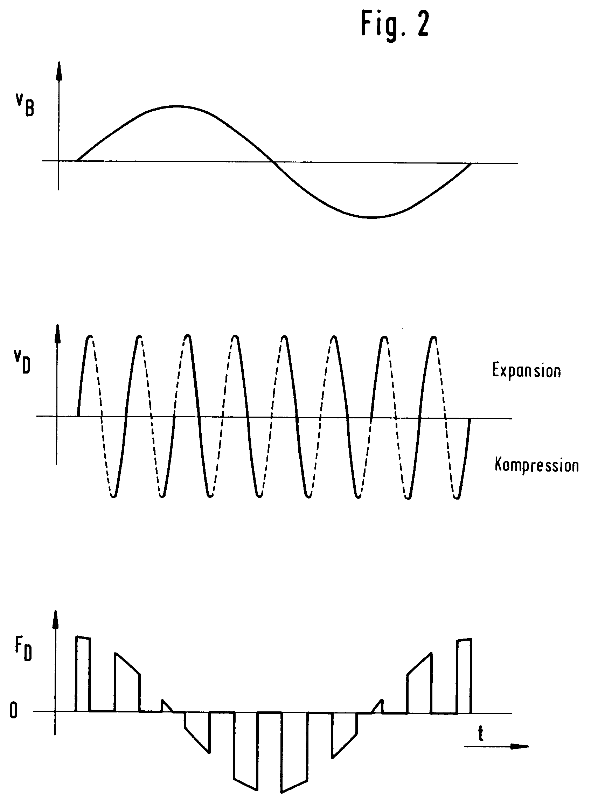

Fig. 2 dient zur Veranschlaulichung der Zusatzbedingung, die besagt, daß bei dem erfindungsgemäßen System die Dämpfkraft 0 werden soll, wenn und solange die Dämpferbewegung und die Aufbaubewegung gegenläufig sind. Anderenfalls würde nämlich während dieser Phasen, in denen $F_D = 0$ gelten soll, der Dämpfer die Aufbaubewegung nicht verringern, sondern verstärken.

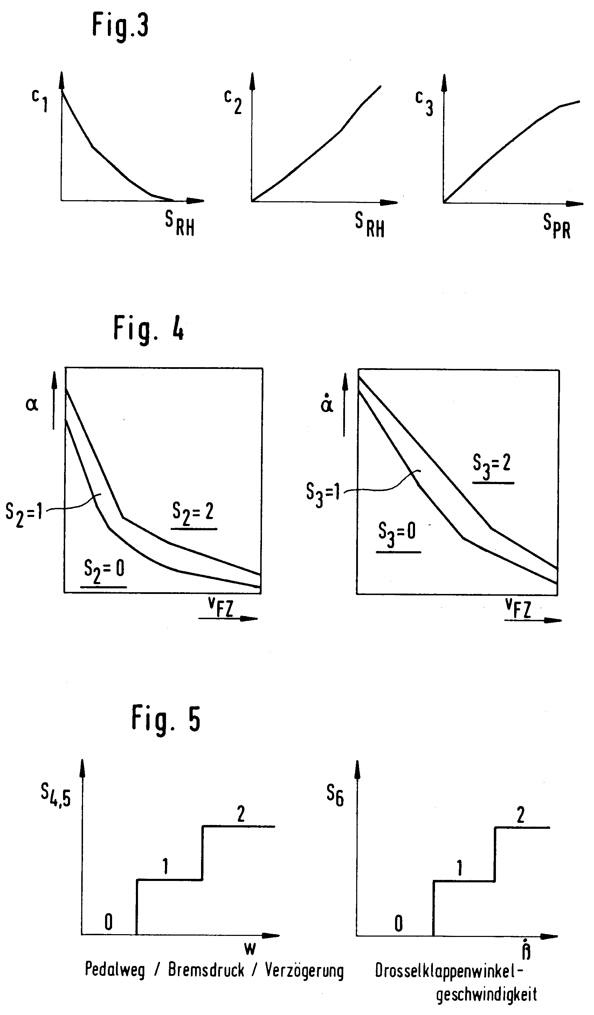

Die Abhängigkeit der einzelnen Parameter $c_1$, $c_2$ und $c_3$ von dem Sicherheitsstatus S, genauer gesagt von den beiden Komponenten $S_{RH}$ und $S_{PR}$, die den Bedarf an Seitenführungs- und/oder Längskräften bzw. die Wank- und/oder Nickgefährdung wiedergeben, ist für ein Ausführungsbeispiel der Erfindung in Fig. 3 wiedergegeben.

Einige der in den Schaltkreisen in Fig. 1 durch Piktogramme angedeuteten Signalverläufe sind in den Fig. 4 und 5 in vergrößertem Maßstab und detaillierter dargestellt. $S_1$ bedarf keiner weiteren Erläuterung; beim Eintritt einer ABS- oder ASR-Funktion wird das Signal von 0 auf 1 gesetzt. $S_2$ ist ein Maß für die Querbeschleunigung des Fahrzeugs und wird daher aus dem Lenkwinkel $\alpha$ und der Fahrzeuggeschwindigkeit $v_{FZ}$ ermittelt. $S_2$ beeinflußt nur die den Bedarf an Seitenführungs- und Längskräften wiedergebende Komponente $S_{RH}$, da Wank- oder Nickbewegungen infolge stationärer Querbeschleunigung durch Dämpfkraftregelvorgänge nicht kompensiert werden können. $S_2$ kann im vorliegenden Ausführungsbeispiel, wie dargestellt, den Wert 0 oder 1 oder 2 annehmen.

$S_3$ ist ein Maß für Querbeschleunigungsänderungen des Fahrzeugs und wird aus der zeitlichen Ableitung des Lenkwinkels $\dot{\alpha}$ unter Berücksichtigung der Fahrzeuggeschwindigkeit $v_{FZ}$ gebildet. $S_3$ beeinflußt sowohl den Bedarf an Seitenführungs- und Längskräften ($S_{RH}$) als auch die die Wank- und Nickgefährdung wiedergebende Komponente $S_{PR}$ des Sicherheitsstatus. $S_3$ kann im vorliegenden Fall ebenfalls den Wert 0 oder 1 oder 2 annehmen.

$S_4$, $S_5$ und $S_6$ sind Sicherheitsstufen, die aus dem Bremspedalweg w, dem Bremsdruck p oder der Verzögerung des Fahrzeugs mit Hilfe des Schaltkreises 4 gewonnen werden. $S_5$ unterliegt dabei noch einem Zeiteinfluß. Die Abhängigkeit der die Wank- und Nickgefährdung wiedergebenden Komponenten $S_{PR}$ von der Drosselklappenwinkelgeschwindigkeit und von dem Beladungszustand wird durch $S_6$ berücksichtigt. Die Signale $S_4$, $S_5$ und $S_6$ können nach vorliegendem Ausführungsbeispiel je nach Situation bzw. HANDLING-Eingangssignal die Werte 0, 1 oder 2 annehmen.

Im allgemeinen genügt es für die erfindungsgemäße Fahrwerksregelung, wenn die Werte der Signale $S_1$ bis $S_6$ in zwei oder drei Stufen, wie dargestellt, unterteilt sind. Eine feinere Unterteilung oder gar kontinuierliche Änderung kann jedoch bei speziellen Fahrwerken von Vorteil sein.

Die Signale $S_1$ bis $S_6$ werden dann, wie bereits anhand der Fig. 1 beschrieben, zur Bildung der Sicherheits-Komponenten $S_{RH}$ und $S_{PR}$ ausgewertet. In Abhängigkeit von diesen Sicherheitskomponenten werden dann die Parameter $c_1$, $c_2$ und $c_3$ ermittelt. Aus diesen Parametern, der Aufbau- und der Dämpfergeschwindigkeit werden im Schaltkreis 22 nach den angegebenen Algorithmen die Signale für eine vorzugsweise kontinuierliche Einstellung oder Anpassung der Dämpfkraft an den jeweiligen Fahrzustand errechnet. Die Erzeugung der Dämpfer-Stellsignale in Abhängigkeit von der Dämpfergeschwindigkeit erfolgt in dem Schaltkreis 23.

**Patentansprüche**

1. Semiaktives Fahrwerksregelungssystem für Kraftfahrzeuge, mit regelbaren Schwingungsdämpfern, mit Sensoren und/oder Schaltkreisen (1-8) zur Ermittlung der für die Regelung benötigten Informationen über den Fahrzustand und über das Fahrwerksverhalten, und mit elektronischen Schaltkreisen (10-25) zur Verarbeitung der Sensorsignale und zur Erzeugung von Dämpfkraftregelsignalen, mit denen die Schwingungsdämpfer ansteuerbar sind, dadurch **gekennzeichnet,** daß diese einen Schaltkreis oder Rechner (22) aufweist, in dem der Sollwert der Dämpfkraft ($F_D$) aus der Aufbaugeschwindigkeit ($v_B$), aus der Dämpfergeschwindigkeit ($v_D$), unter Beachtung des Vorzeichens der Dämpfergeschwindigkeit (sign ($v_D$)) sowie aus von einem Sicherheitsstatus abhängigen Parametern ($c_1$, $c_2$, $c_3$) nach der Beziehung

$$F_D = c_1 \times v_B + c_2 \times v_D + c_3 \times sign(v_D);$$

$$F_D = 0, \text{ wenn } sign(v_D) \neq sign(F_D)$$

errechnet wird, und daß Schaltkreise (11,12,19,20,21) vorhanden sind, mit denen eine den Bedarf an Seitenführungs- und/oder Längskräften wiedergebende Komponente ($S_{RH}$) des Sicherheitsstatus und eine die Wank- und/oder Nickgefährdung wiedergebende Komponente ($S_{PR}$) des Sicherheitsstatus gebildet und mit denen die Parameter ($c_1$, $c_2$, $c_3$) in Abhängigkeit von den Komponenten ($S_{RH}$, $S_{PR}$) des Sicherheitsstatus ermittelt werden.

2. Fahrwerksregelungssystem nach Anspruch 1, dadurch **gekennzeichnet,** daß die die Seitenführungs- und/oder Längskräfte wiedergebende Komponente ($S_{RH}$) von dem momentanen Lenkwinkel ($\alpha$) und von der Fahrzeuggeschwindigkeit ($v_{FZ}$) abhängig ist.

3. Fahrwerksregelungssystem nach Anspruch 2, dadurch **gekennzeichnet,** daß die die Seitenführungs- und/oder Längskräfte wiedergebende Komponente ($S_{RH}$) zusätzlich von dem Bremspedalweg (w) oder dem Bremsdruck (p) abhängig ist.

4. Fahrwerksregelungssystem nach Anspruch 2 oder 3, dadurch **gekennzeichnet,** daß bei Fahrzeugen mit ABS (Antiblockiersystem) und/oder ASR (Antriebsschlupfregelung) die die Seitenführungs- und/oder Längskräfte wiedergebende Komponente

($S_{RH}$) zusätzlich von dem Regelmodus (ABS/ASR) oder von dem Eintritt in die Regelung abhängig ist.

5. Fahrwerksregelungssystem nach einem oder mehreren der Ansprüche 1 bis 4, dadurch **gekennzeichnet,** daß die die Wank- und/oder Nickgefährdung wiedergebende Komponente ($S_{PR}$) von dem Bremspedalweg (w) und von der Drosselklappenwinkelgeschwindigkeit ($\dot{\beta}$) des Antriebsmotors abhängig ist.

6. Fahrwerksregelungssystem nach Anspruch 5, dadurch **gekennzeichnet,** daß die die Seitenführungs- und/oder Längskräfte wiedergebende Komponente ($S_{RH}$) und die die Wank- und/oder Nickgefährdung wiedergebende Komponente ($S_{PR}$) zusätzlich von dem Beladungszustand und/oder dem Druck ($P_L$) in den Schwingungsdämpfern (6) abhängig sind.

7. Fahrwerksregelungssystem nach Anspruch 5 oder 6, dadurch **gekennzeichnet,** daß die die Wank- und/oder Nickgefährdung wiedergebende Komponente ($S_{PR}$) zusätzlich von der Lenkwinkelgeschwindigkeit ($\dot{\alpha}$) und/oder von der Fahrzeuggeschwindigkeit ($v_{FZ}$) abhängig ist.

8. Fahrwerksregelungssystem nach einem oder mehreren der Ansprüche 1 bis 7, dadurch **gekennzeichnet,** daß die Abhängigkeit der Regelparameter ($c_1$, $c_2$, $c_3$) von den Komponenten ($S_{RH}$, $S_{PR}$) des Sicherheitsstatus (S) durch vorgegebene Algorithmen oder durch tabellarisch in den Schaltkreisen (19,20,21) gespeicherte Werte festgelegt ist.

**Claims**

1. A semi-active suspension control system for automotive vehicles, including controllable vibration dampers, sensors and/or circuits (1-8) for gathering the information on the driving condition and on the suspension behaviour that is required for control, and electronic circuits (10-25) for processing the sensor signals and for generating damping force control signals by means of which the vibration dampers are actuatable, **characterized** in that the system has a circuit or a computer (22) wherein the nominal value of the damping force ($F_D$) is calculated from the body speed ($v_B$), from the damper speed ($v_D$), subject to the sign of the damper speed (sign ($v_D$)), and from parameters ($c_1$, $c_2$, $c_3$), which depend on a safety status, in accordance with the relationship

$$F_D = c_1 \times v_B + c_2 \times v_D + c_3 \times sign(v_D);$$

$$F_D = 0 \text{ if } sign(v_D) \neq sign(F_D),$$

and in that circuits (11, 12, 19, 20, 21) are provided, by means of which a safety status constituent ($S_{RH}$)

representing the demand for lateral-stability forces and/or longitudinal forces and a safety status constituent ($S_{PR}$) representing the roll and/or pitch dangers are formed and by means of which the parameters ($c_1$, $c_2$, $c_3$) are determined in dependence on the safety status constituents ($S_{RH}$, $S_{PR}$).

2. A suspension control system as claimed in claim 1, **characterized** in that the constituent ($S_{RH}$) representing the lateral-stability and/or longitudinal forces depends on the momentary steering angle ($\alpha$) and on the vehicle speed ($v_{VZ}$).

3. A suspension control system as claimed in claim 2, **characterized** in that the constituent ($S_{RH}$) representing the lateral-stability forces and/or longitudinal forces in addition depends on the brake pedal travel (w) or on the braking pressure (p).

4. A suspension control system as claimed in claim 2 or in claim 3, **characterized** in that, in vehicles with an anti-lock control system (German abbreviation: ABS) and/or with traction slip control (German abbreviation: ASR), the constituent ($S_{RH}$) representing the lateral-stability forces and/or longitudinal forces in addition depends on the control mode (ABS/ASR) or on the onset of control.

5. A suspension control system as claimed in one or in several of claims 1 through 4, **characterized** in that the constituent ($S_{PR}$) representing the roll and/or pitch dangers depends on the brake pedal travel (w) and on the throttle valve angle velocity ($\dot{\beta}$) of the drive motor.

6. A suspension control system as claimed in claim 5, **characterized** in that the constituent ($S_{RH}$) representing the lateral-stability and/or longitudinal forces and the constituent ($S_{RP}$) representing the roll and/or pitch dangers in addition depend on the load condition and/or on the pressure ($p_L$) in the vibration dampers (6).

7. A suspension control system as claimed in claim 5 or in claim 6, **characterized** in that the constituent ($S_{PR}$) representing the roll and/or pitch dangers in addition depends on the steering angle velocity ($\dot{\alpha}$) and/or on the vehicle speed ($V_{FZ}$).

8. A suspension control system as claimed in one or in several of claims 1 through 7, **characterized** in that the dependence of the control parameters ($c_1$, $c_2$, $c_3$) on the constituents ($S_{RH}$, $S_{PR}$) of the safety status (S) is established by predetermined algorithms or by values stored in tabulary form in the circuits (19, 20, 21).

**Revendications**

1. Système semi-actif de régulation d'un mécanisme de roulement pour véhicules automobiles, comprenant des amortisseurs de vibrations réglables, comprenant des capteurs et/ou des circuits de commande (1 à 8) destinés à déterminer les informations requises pour la régulation, concernant la situation de conduite et le comportement du châssis, et comprenant des circuits de commande électroniques (10 à 25) destinés à traiter les signaux des capteurs et à générer des signaux de réglage de l'effort d'amortissement pouvant être communiqués aux amortisseurs de vibrations,
caractérisé en ce qu'il comporte un circuit de commande ou calculateur (22), dans lequel la valeur consigne ($F_D$) de l'effort d'amortissement est calculée à partir de la vitesse ($v_B$) de la caisse, de la vitesse ($v_D$) d'amortissement, en prenant en compte le signe de la vitesse d'amortissement ($sign(v_D)$), et à partir de paramètres ($c_1$, $c_2$, $c_3$) dépendant d'un état de sécurité, selon la relation

$$F_D = c_1 \cdot v_B + c_2 \cdot v_D + c_3 \cdot sign(v_D);$$

$$F_D = 0, \text{ si } sign(v_D) \neq sign(F_D);$$

et en ce que des circuits ce commande (11, 12, 19, 20, 21) sont prévus, à l'aide desquels on définit une composante ($S_{RH}$) de l'état de sécurité, qui représente le besoin de forces de guidage latéral et/ou longitudinal, et une composante ($S_{PR}$) de l'état de sécurité, qui représente le risque de roulis et/ou de tangage, et à l'aide desquels les paramètres ($c_1$, $c_2$, $c_3$) sont déterminés en fonction des composantes ($S_{RH}$, $S_{PR}$) de l'état de sécurité.

2. Système de régulation d'un mécanisme de roulement selon la revendication 1, caractérisé en ce que la composante ($S_{RH}$) représentant les forces de guidage latéral et/ou longitudinal dépend de l'angle de braquage momentané ($\alpha$) et de la vitesse du véhicule ($v_{FZ}$).

3. Système de régulation d'un mécanisme de roulement salon la revendication 2, caractérisé en ce que la composante ($S_{RH}$) représentant les forces de guidage latéral et/ou longitudinal dépend en outre de la course (w) de la pédale de frein ou de la pression de freinage (p).

4. Système de régulation d'un mécanisme de roulement selon la revendication 2 ou 3, caractérisé en ce que, dans le cas de véhicules équipés d'un système ABS (anti-blocage des roues) et/ou d'une régulation ASR (anti-patinage en traction) la composante ($S_{RH}$) représentant les forces de guidage latéral et/ou longitudinal dépend en outre du mode de régulation (ABS/ASR) ou du début d'une telle régulation.

5. Système de régulation d'un mécanisme de roulement selon l'une des revendications 1 à 4, caractérisé en ce que la composante ($S_{PR}$) représentant le risque de roulis et/ou de tangage dépend de la course (w) de la pédale de frein et de la vitesse angulaire ($\dot{\beta}$) du papillon des gaz du moteur de propulsion.

6. Système de régulation d'un mécanisme de roulement selon la revendication 5, caractérisé en ce que la composante ($S_{PR}$) représentant le risque de roulis et/ou de tangage dépend en outre de l'état de chargement et/ou de la pression ($p_L$) régnant dans les amortisseurs de vibrations (6).

7. Système de régulation d'un mécanisme de roulement selon la revendication 5 ou 6, caractérisé en ce que la composante ($S_{PR}$) représentant le risque de roulis et/ou de tangage dépend en outre de la vitesse angulaire de direction ($\dot{\alpha}$) et/ou de la vitesse du véhicule ($v_{FZ}$).

8. Système de régulation d'un mécanisme de roulement selon l'une des revendications 1 à 7, caractérisé en ce que la dépendance des paramètres de réglage ($c_1$, $c_2$, $c_3$) des composantes ($S_{RH}$, $S_{PR}$) de l'état de sécurité (S) est fixée par des algorithmes prédéfinis ou par des valeurs enregistrées sous forme de tableaux dans les circuits de commande (19, 20, 21).

Fig. 1

EP 0 546 295 B1

# Fig. 2

# Fig.3

$c_1$

$S_{RH}$

$c_2$

$S_{RH}$

$c_3$

$S_{PR}$

# Fig. 4

$\alpha$

$S_2=1$

$S_2=0$

$S_2=2$

$v_{FZ}$

$\dot{\alpha}$

$S_3=1$

$S_3=0$

$S_3=2$

$v_{FZ}$

# Fig. 5

$S_{4,5}$

0

1

2

w

Pedalweg / Bremsdruck / Verzögerung

$S_6$

0

1

2

$\dot{\beta}$

Drosselklappenwinkelgeschwindigkeit